# FASCICULE DE BREVET EUROPEEN

(11) **EP 2 241 171 B1**
(45) Date de publication et mention de la délivrance du brevet: **09.05.2012**
(21) Numéro de dépôt: 10159293.9
(22) Date de dépôt: 08.04.2010
(51) Int. Cl.: A01D 34/535

(54) **Dispositif porte-outils a maintien des outils en position de travail par formes adaptables**
Werkzeughalterungsvorrichtung zur Aufrechterhaltung der Werkzeuge in Arbeitsposition für adaptierbare Formen
Tool-holder device for holding tools in working position by means of adaptable shapes

(30) Priorité: 14.04.2009 FR 0952431
(43) Date de publication de la demande: 20.10.2010
(73) Titulaire: Actibac, 54550 Maizières (FR)
(72) Inventeur: Bachmann, Christophe, 54550 Maizières (FR)
(74) Mandataire: Abello, Michel

(56) Documents cités:
- EP-A1- 1 481 581
- EP-A1- 1 915 896
- EP-A1- 2 039 234
- DE-A1-102005 023 014
- FR-A1- 2 881 916
- US-A- 4 241 568

## Description

La présente invention concerne d'une manière générale un dispositif porte-outils destiné à une machine de coupe ou de broyage.

De tels dispositifs sont constitués par un arbre portant des outils travaillant à la manière de fléaux au cours de la rotation de l'arbre et équipent par exemple des machines pour la coupe et/ou le broyage de végétaux telles que les faucheuses rotatives utilisées pour la coupe des cultures, les épareuses utilisées pour l'entretien des espaces verts, bords de route ...ou les machines de broyage utilisées dans différentes techniques telles que le broyage de pierres.

Dans les épareuses utilisées au sol ou les broyeurs de pierres, l'arbre du dispositif porte-outils est positionné horizontalement, tandis que dans les faucheuses ou les épareuses utilisées pour la taille de haies, l'arbre est positionné verticalement.

Ledit arbre peut également être disposé obliquement pour certaines coupes effectuées en hauteur sur des végétaux comme l'élagage.

Au cours de la rotation de l'arbre, le travail de coupe et/ou broyage est effectué dans les meilleures conditions lorsque l'outil est disposé radialement par rapport à l'arbre, sous l'action de la force centrifuge ; de sorte que l'effort qu'il applique sur les produits à traiter soit le plus important possible.

A titre d'exemple, dans les montages pour machine de coupe et/ou broyage de végétaux tels que les épareuses, le dispositif porte-outils comporte un arbre, souvent constitué par un tube creux, équipé de chapes positionnées perpendiculairement à son axe et portant des supports axiaux, c'est-à-dire parallèles à l'axe de l'arbre, supportant les outils en traversant leur orifice de montage.

De manière connue en soi, au moins un outil est monté sur chaque support axial, les machines présentant de préférence deux outils sur chaque support axial.

Les chapes sont usuellement positionnées par paires, chaque paire portant un support axial, lequel porte un ou deux outils ou bien une manille, qui porte le ou les deux outils.

Dans ce dernier type de montage la manille peut tourner autour de son support axial ; de même que le ou les outils peuvent tourner autour de la manille.

Ces montages sont réalisés de façon que les outils ou les manilles puissent tourner librement ; de sorte qu'ils puissent être escamotés soit par la rotation de la manille, soit par la rotation de l'outil. Cette disposition permet aux outils de s'écarter de leur position de coupe lorsque ils entrent en contact avec des obstacles qu'ils ne peuvent couper tels que des pierres, des souches ou de grosses branches ou encore une végétation très dense dans la cas d'une machine de coupe et/ou broyage de végétaux.

Un tel type de montage est décrit par exemple dans le brevet EP 1.915.895 du 22 octobre 2007.

EP 2039234 A1 décrit un dispositif conforme au préambule des revendications 1, 3 et 5.

Quel que soit le type de montage, les outils sont ramenés vers leur position de travail, globalement perpendiculaire à l'arbre que les porte, par la force centrifuge engendrée par la rotation de l'arbre.

C'est la raison pour laquelle, dans les machines actuellement existantes, l'arbre est entrainé à environ 3000 tours par minute, afin de fournir une force centrifuge suffisante pour assurer le retour et le maintien des outils dans leur position radiale de coupe. Cette vitesse de rotation très élevée demande une puissance d'entrainement importante, d'où la nécessité de mettre en oeuvre des tracteurs puissants, ce qui entraîne de coûteuses dépenses en énergie et en matériel.

Dans le contexte actuel de recherche constante de réduction de la consommation d'énergie, il est envisagé de réduire la vitesse de rotation de l'arbre afin de réduire la consommation des engins tracteurs. Se pose alors un problème en ce qui concerne le retour des outils en position de travail, lorsque ceux-ci ont été écartés de leur position par un obstacle, du fait que la baisse de la vitesse de rotation de l'arbre entraîne une réduction importante de la force centrifuge qui doit les ramener en position.

Il faut donc assurer deux effets antagonistes : d'une part disposer des moyens pour faciliter le maintien et le retour en position radiale des outils, même avec une vitesse de rotation relativement faible de l'arbre ; d'autre part que les moyens ainsi mis en oeuvre ne gênent pas l'effacement desdits outils lorsqu'ils heurtent un obstacle.

Le but de la présente invention est de disposer un dispositif porte-outils qui fournit une efficacité de coupe aussi importante que celle obtenue avec les machines tournant à vitesse très élevée et cela avec une vitesse de rotation réduite afin d'économiser de l'énergie.

La présente invention concerne un dispositif porte-outils du type constitué par un arbre, muni de chapes portant un support axial, lequel porte à pivotement un élément intermédiaire ou manille, dont la partie inférieure ou tige traverse les orifices de montage des fléaux de coupe ou de broyage, caractérisé par le fait que les orifices de montage, soit de la manille, soit des fléaux, soit des deux ont des formes s'adaptant à celles du support axial et/ou à celles de la tige de la manille avec un jeu important, ce qui autorise leur déplacement relatif, lorsque le fléau heurte un obstacle, tout en favorisant son retour en position axiale du fait de la force centrifuge, même lorsque celle-ci est faible du fait de la rotation relativement lente de l'arbre qui porte les outils.

Le terme « obstacle » est utilisé dans les présentes pour désigner tout objet qui gêne le fonctionnement de l'outil et perturbe son travail. A titre d'exemple, lorsque l'arbre est mis en oeuvre sur une épareuse : une pierre, une souche, une branche trop épaisse ou une végétation trop dense peuvent constituer un obstacle contre lequel va venir buter l'outil.

Le dispositif porte-outils selon l'invention est encore remarquable en ce qu'il peut comporter une ou plusieurs des caractéristiques suivantes :
- le support axial est de section circulaire et traverse deux orifices circulaires de la manille, dont la tige est de section triangulaire, les orifices de montage des fléaux, situés dans leur partie non travaillante, étant de forme triangulaire correspondante, de dimensions supérieures à celles de la section triangulaire de la tige de la manille ;
- les dimensions de l'orifice de montage de chaque fléau sont pratiquement le double de celles de la tige de la manille ;
- le support axial est de section triangulaire et traverse deux orifices de montage triangulaires, de dimensions supérieures, de la manille, dont la tige est de section circulaire, les orifices des fléaux, situés dans leur partie non travaillante, étant de forme oblongue d'une largeur légèrement supérieure au diamètre de la tige de la manille ;
- les dimensions des orifices triangulaires de montage de la manille sur le support axial triangulaire sont pratiquement le double de celles dudit support axial ;
- le support axial est de section triangulaire et traverse deux orifices triangulaires, de dimensions supérieures, de la manille, dont la tige est aussi de section triangulaire et traverse les orifices de montage des fléaux, qui sont également triangulaires et de dimensions supérieures ;
- les dimensions des orifices triangulaires de montage de la manille sur le support axial de section triangulaire sont pratiquement le double de celles dudit support axial et, de même, les dimensions des orifices de montage des fléaux sur la tige triangulaire de la manille sont pratiquement le double de celles de ladite tige.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 représente un arbre tubulaire muni de chapes portant un support axial de section circulaire.
La figure 2 représente un arbre tubulaire muni de chapes portant un support axial de section triangulaire.
La figure 3 représente un premier exemple de mise en oeuvre de l'invention.
La figure 4 représente un deuxième exemple de mise en oeuvre de l'invention.
La figure 5 représente un troisième exemple de mise en oeuvre de l'invention.
Les figures 6, 7 et 8 représentent les trois modes de fonctionnement du premier exemple de réalisation.
Les figures 9, 10 et 11 représentent les trois modes de fonctionnement du deuxième exemple de réalisation.
Les figures 12, 13 et 14 représentent les trois modes de fonctionnement du troisième exemple de réalisation.

Dans la description qui va suivre en référence aux différentes variantes de réalisation représentées aux dessins, le dispositif selon l'invention est destiné à équiper une épareuse et l'on désigne par « fléau » l'outil de coupe ou de broyage de la végétation comportant une partie travaillante et un moyen de montage présentant un orifice, qui est traversé par un moyen de support dit « support axial ».

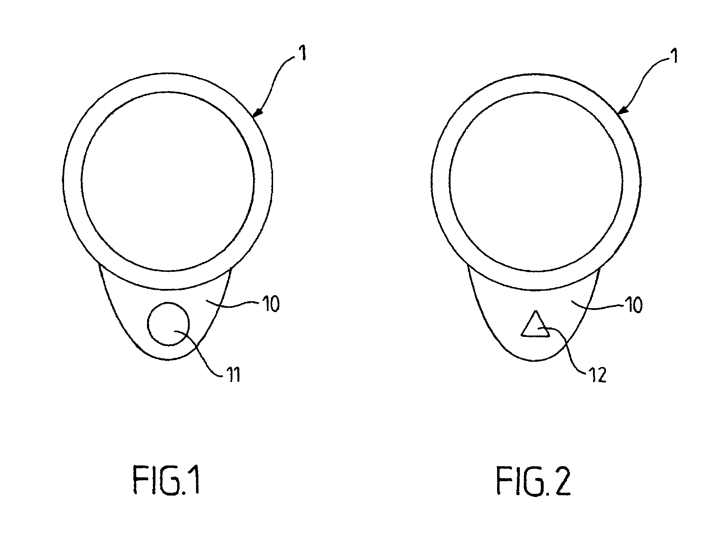

Comme on le voit sur les figures 1 et 2 le dispositif porte-outils est constitué d'un arbre 1, généralement sous la forme d'un arbre creux, muni de chapes 10, lesquelles portent un support axial 11 ou 12 ; le support axial 11 étant de section circulaire, alors que le support axial 12 est de section triangulaire.

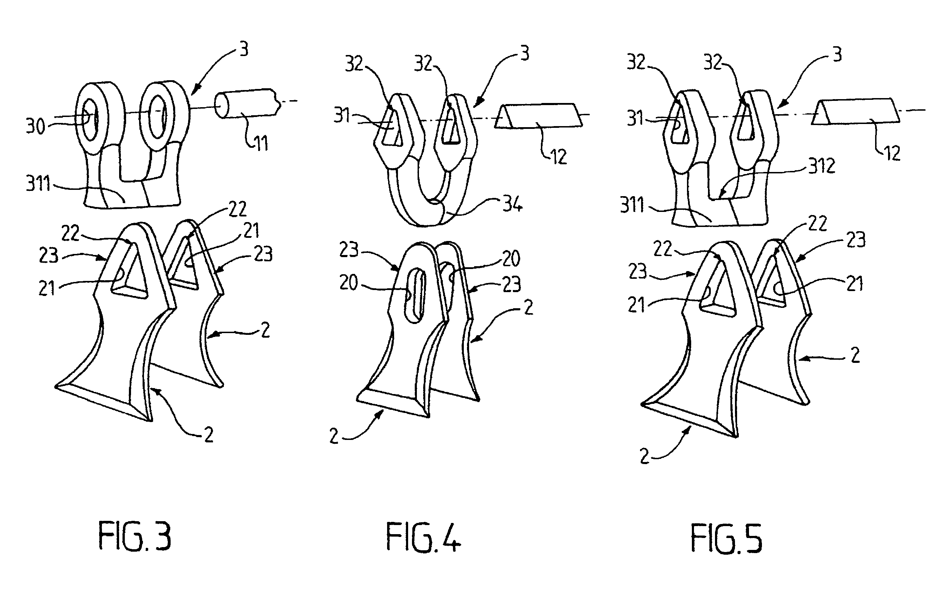

En se reportant à la figure 3 on voit que le support axial 11 est de section circulaire et traverse les deux orifices circulaires 30 d'une manille 3. Le diamètre des orifices 30 est légèrement plus grand que celui du support 10, de façon que la manille 3 puisse pivoter librement autour dudit support.

La partie inférieure 311 de la manille 3, ci-après appelée « tige » est de section triangulaire.

Cette tige triangulaire 311 traverse les orifices de montage 21 des outils ou fléaux 2, lesquels comportent une partie travaillante biseautée. Les orifices de montage 21 ont une forme triangulaire correspondante à celle de la tige 311 de la manille 3, c'est-à-dire que les triangles ont des angles égaux ; mais des dimensions différentes, les cotés des triangles 21 étant plus grands que les cotés de la tige 311.

De préférence, comme dans l'exemple représenté, les cotés des triangles 21 ont une longueur pratiquement double de celles des cotés de la tige 311.

En se reportant à la figure 4 on voit que le support axial 12 est de section triangulaire et traverse les deux orifices de montage 31 de la manille 3, qui sont également triangulaires. Comme dans l'exemple précédent, en ce qui concerne les formes et dimensions des triangles, ceux-ci ont des angles égaux, mais des cotés de longueurs différentes, les cotés des triangles 31 étant plus grands que ceux du support axial 12.

De préférence, dans ce cas également, les cotés des triangles 31 ont une longueur pratiquement double de celles des cotés du support axial 12.

La tige 34 de la manille 3 traverse les orifices 20 de montage des fléaux 2. Cette tige est de section circulaire et lesdits orifices de montage 20 ont une forme oblongue dont la largeur est légèrement plus grande que le diamètre de la tige 34 ; de façon à pouvoir pivoter librement.

En se reportant à la figure 5 on voit que : le support axial 12 est de section triangulaire ; qu'il traverse les deux orifices de montage 31 de la manille 3 ; que la tige 311 de la manille 3 est aussi de section triangulaire et que les orifices de montage 21 des fléaux également.

Le dispositif de la figure 5 constitue donc une addition des moyens de figures 3 et 4. Les formes et dimensions des triangles ont les mêmes caractéristiques.

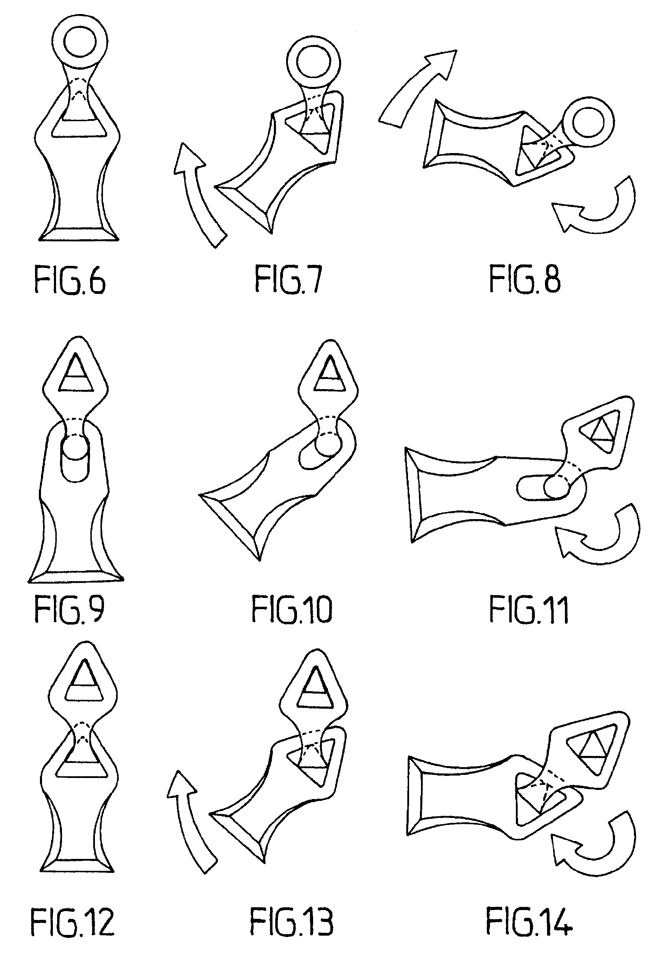

Les figures 6, 7 et 8 illustrent le fonctionnement du dispositif de la figure 3.

La position représentée à la figure 6 est la position normale de travail pour laquelle le fléau 2 est disposé radialement par rapport à l'arbre 1 et est maintenu écarté dudit arbre sous l'effet de la force centrifuge engendrée par la rotation dudit arbre.

L'angle au sommet 22 de chaque orifice 21 des fléaux 2 étant égal à l'angle au sommet de la tige 311, cette tige vient s'emboiter dans cet angle. Il s'en suit un maintien mécanique en position radiale qui s'ajoute à l'effet produit par la force centrifuge.

En se reportant à la figure 7 ont voit que le fléau a la possibilité de s'escamoter lorsqu'il rencontre un obstacle ; parce que les dimensions du triangle de l'orifice 21 sont supérieures à celles du triangle du support axial.

En se reportant à la figure 8 on voit que le dispositif de la figure 3 permet un double escamotage ; puisque le fléau 2 a pivoté autour de la tige de la manille 3 et que cette dernière a pivoté par autour de son support axial.

Les figures 9, 10 et 11 montrent que ce double escamotage est également possible avec le dispositif de la figure 4.

Il en est de même avec le dispositif de la figure 5, comme le montrent les figures 12, 13 et 14.

Cette possibilité de double escamotage constitue un intérêt de la présente invention, la disposition de la figure 5 combinant en plus l'avantage d'un double maintien en position radiale avec celui du double escamotage.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » pour un élément n'exclut pas, sauf mention contraire, la présence d'une pluralité de tels éléments.

Dans les revendications, tout signe de référence entre parenthèses ne saurait être interprété comme une limitation de la revendication.

## Revendications

1. Dispositif porte-outils du type constitué par un arbre (1), muni de chapes (10) portant un support axial (11,12), lequel porte à pivotement un élément intermédiaire ou manille (3), dont la partie inférieure ou tige traverse les orifices de montage (20,21) des fléaux de coupe ou de broyage (2), dans lequel le support axial (11) est de section circulaire et traverse deux orifices circulaires (30) de la manille (3),
**caractérisé par le fait que** la tige (311) de la manille est de section triangulaire, les orifices de montage (21) des fléaux (2), situés dans leur partie non travaillante, étant de forme triangulaire correspondante, de dimensions supérieures à celles de la section triangulaire de la tige (311) de la manille (3), de sorte que les orifices de montage (21) fléaux (2) ont des formes triangulaires s'adaptant à la section triangulaire de la tige (311) de la manille (3) avec un jeu important, ce qui autorise leur déplacement relatif, lorsque le fléau heurte un obstacle, tout en favorisant un retour des fléaux en position axiale du fait de la force centrifuge, même lorsque celle-ci est faible du fait de la rotation relativement lente de l'arbre (1) qui porte les fléaux (2) à une vitesse inférieure à 3000 tr/min.

2. Dispositif porte-outils selon la revendication 1, **caractérisé par le fait que** les dimensions de l'orifice de montage (21) de chaque fléau (2) sont pratiquement le double de celles de la tige (311) de la manille (3).

3. Dispositif porte-outils du type constitué par un arbre (1), muni de chapes (10) portant un support axial (11,12), lequel porte à pivotement un élément intermédiaire ou manille(3), dont la partie inférieure ou tige traverse les orifices de montage (20,21) des fléaux de coupe ou de broyage (2), dans lequel la tige (34) de la manille est de section circulaire, les orifices (20) des fléaux (2), situés dans leur partie non travaillante, étant de forme oblongue d'une largeur légèrement supérieure au diamètre de la tige (34) de la manille (3),
**caractérisé par le fait que** le support axial (12) est de section triangulaire et traverse deux orifices de montage triangulaires (31), de dimensions supérieures, de la manille (3), de sorte que les orifices de montage (31) de la manille (3) ont des formes triangulaires s'adaptant à la section triangulaire du support axial (12) avec un jeu important, ce qui autorise leur déplacement relatif, lorsque le fléau heurte un obstacle, tout en favorisant un retour de la manille en position axiale du fait de la force centrifuge, même lorsque celle-ci est faible du fait de la rotation relativement lente de l'arbre (1) qui porte les fléaux (2) à une vitesse inférieure à 3000 tr/min.

4. Dispositif selon la revendication 3, **caractérisé par le fait que** les dimensions des orifices triangulaires (31) de montage de la manille (3) sur le support axial triangulaire sont pratiquement le double de celles dudit support axial (12).

5. Dispositif porte-outils du type constitué par un arbre (1), muni de chapes (10) portant un support axial (11,12), lequel porte à pivotement un élément intermédiaire ou manille (3), dont la partie inférieure ou tige traverse les orifices de montage (20,21) des fléaux de coupe ou de broyage (2), **caractérisé par le fait que** le support axial (12) est de section triangulaire et traverse deux orifices triangulaires (31) de dimensions supérieures de la manille (3), de sorte que les orifices de montage (31) de la manille (3) ont des formes triangulaires s'adaptant à la section triangulaire du support axial (12) avec un jeu important, et que la tige (311) de la manille est aussi de section triangulaire et traverse les orifices de montage (21) des fléaux (2),qui sont également triangulaires et de dimensions supérieures, de sorte que les orifices de montage (21) des fléaux (2) ont des formes triangulaires s'adaptant à la section triangulaire de la tige (311) de la manille (3) avec un jeu important, ce qui autorise le déplacement relatif de la manille par rapport à la chape et des fléaux par rapport à la manille, lorsque le fléau heurte un obstacle, tout en favorisant leur retour en position axiale du fait de la force centrifuge, même lorsque celle-ci est faible du fait de la rotation relativement lente de l'arbre (1) qui porte les fléaux (2) à une vitesse inférieure à 3000 tr/min.

6. Dispositif porte-outils selon la revendication 5, **caractérisé par le fait que** les dimensions des orifices triangulaires de montage (31) de la manille (3) sur le support axial (12) de section triangulaire sont pratiquement le double de celles dudit support (12) et, de même, les dimensions des orifices de montage (21) des fléaux (2) sur la tige triangulaire (311) de la manille (3) sont pratiquement le double de celles de ladite tige (311).

## Claims

1. Tool-holding device of the type constituted by a shaft (1), provided with yoke joints (10) bearing an axial support (11, 12), which bears in a pivoting manner an intermediary element or shackle (3), the lower part or bar of which passes through the mounting holes (20, 21) of the cutting or chopping knives (2), in which the axial support (11) has a circular cross-section and passes through two circular holes (30) in the shackle (3),
**characterised in that** the bar (311) of the shackle has a triangular cross-section, the mounting holes (21) of the knives (2), located on the non-working parts thereof, being correspondingly triangular in shape, of larger dimensions than those of the triangular cross-section of the bar (311) of the shackle (3), such that the mounting holes (21) of the knives (2) have triangular shapes fitting the triangular cross-section of the bar (311) of the shackle (3) with a sizeable clearance, which allows them to move relative to one another, when the knife hits an obstacle, while promoting a return of the knives to the axial position due to the centrifugal force, even when this is weak due to the relatively slow rotation of the shaft (1) carrying the knives (2) at a speed below 3000 rpm.

2. Tool-holding device according to claim 1, **characterised in that** the dimensions of the mounting hole (21) of each knife (2) are practically double that of the bar (311) of the shackle (3).

3. Tool-holding device of the type constituted by a shaft (1), provided with yoke joints (10) bearing an axial support (11, 12), which bears in a pivoting manner an intermediary element or shackle (3), the lower part or bar of which passes through the mounting holes (20, 21) of the cutting or chopping knives (2), in which the bar (34) of the shackle has a circular cross-section, the holes (20) of the knives (2), located on the non-working parts thereof, being oblong in shape with a width slightly greater than the diameter of the bar (34) of the shackle (3),
**characterised in that** the axial support (12) has a triangular cross-section and passes through two triangular mounting holes (31), of greater dimensions than the shackle (3), such that the mounting holes (31) of the shackle (3) have triangular shapes fitting the triangular cross-section of the axial support (12) with a sizeable clearance, which allows them to move relative to one another, when the knife hits an obstacle, while promoting a return of the shackle to the axial position due to the centrifugal force, even when this is low due to the relatively slow rotation of the shaft (1) bearing the knives (2) at a speed below 3000 rpm.

4. Device according to claim 3, **characterised in that** the dimensions of the triangular mounting holes (31) of the shackle (3) on the triangular axial support are practically double those of said axial support (12).

5. Tool-holding device of the type constituted by a shaft (1), provided with yoke joints (10) bearing an axial support (11, 12), which bears in a pivoting manner an intermediary element or shackle (3), the lower part or bar of which passes through the mounting holes (20, 21) of the cutting or chopping knives (2), **characterised in that** the axial support (12) has a triangular cross-section and passes through two triangular mounting holes (31), of greater dimensions than the shackle (3), such that the mounting holes (31) of the shackle (3) have triangular shapes fitting the triangular cross-section of the axial support (12) with a sizeable clearance, and that the bar (311) of the shackle also has a triangular cross-section and passes through the mounting holes (21) of the knives (2), which also have a triangular cross-section and of greater dimensions, such that the mounting holes (21) of the knives (2) have triangular shapes fitting the triangular cross-section of the bar (311) of the shackle (3) with a sizeable clearance, which allows the shackle to move relative to the yoke joint and the knives relative to the shackle, when the knife hits an obstacle, while promoting their return to the axial position due to the centrifugal force, even when this is low due to the relatively slow rotation of the shaft (1) bearing the knives (2) at a speed below 3000 rpm.

6. Tool-bearing device according to claim 5, **characterised in that** the dimensions of the triangular mounting holes (31) of the shackle (3) on the axial support (12) with a triangular cross-section are practically double those of said support (12) and, likewise, the dimensions of the mounting holes (21) of the knives (2) on the triangular bar (311) of the shackle (3) are practically double those of said bar (311).

## Patentansprüche

1. Werkzeughalterungsvorrichtung für eine Welle (1), mit einen Axialträger (11, 12) tragenden Gabeln (10), die zum Drehen ein Zwischenelement oder einen Schäkel (3) tragen, dessen unteres Teil oder Schaft durch die Montageöffnungen der Schneid- oder Zerkleinerungsflegel (2) geht, wobei der Axialträger (11) einen kreisförmigen Querschnitt aufweist und durch die zwei kreisförmigen Öffnungen (30) des Schäkels (3) geht,
**dadurch gekennzeichnet, daß** der Schaft des Schäkels einen dreieckigen Querschnitt aufweist, die Montageöffnungen (21) der Flegel (2), die in deren nicht arbeitenden Teil liegen, eine entsprechende Dreiecksform mit Abmessungen aufweisen, die derart größer sind als die des dreieckigen Querschnitts des Schafts (311) des Schäkels (3), daß die Montageöffnungen (21) der Schlegel (2) solche Dreiecksformen aufweisen, die an den Dreiecksquerschnitt des Schaftes (311) des Schäkels (3) mit einem relevanten Spiel angepaßt sind, das ihre relative Bewegung ermöglicht, wenn der Schlegel ein Hindernis trifft, um eine Rückkehr der Schlegel in die Axialposition aufgrund der Zentrifugalkraft zu begünstigen, auch wenn sie gering ist aufgrund der relativ langsamen Drehung der Welle (1), die die Schlegel (2) mit einer Geschwindigkeit von weniger als 3000 Umdrehungen pro Minute trägt.

2. Werkzeughalterungsvorrichtung nach Anspruch 1, **dadurch gekennzeichnet, daß** die Abmessungen der Montageöffnung (21) jedes Flegels (2) so gut wie das Doppelte der des Schaftes (311) des Schäkels (3) betragen.

3. Werkzeughalterungsvorrichtung für eine Welle (1), mit einen Axialträger (11, 12) tragenden Gabeln (10), die zum Drehen ein Zwischenelement oder einen Schäkel (3) tragen, dessen unteres Teil oder Schaft durch die Montageöffnungen der Schneid- oder Zerkleinerungsflegel (2) geht, wobei der Schaft (34) des Schäkels einen kreisförmigen Querschnitt aufweist, die Öffnungen (20) der Schlegel (2), die in deren nicht arbeitenden Teil liegen, eine länglich Form mit einer Breite aufweisen, die etwas größer ist als der Durchmesser des Schaftes (34) des Schäkels (3),
**dadurch gekennzeichnet, daß** der Axialträger (12) einen dreieckigen Querschnitt aufweist und durch zwei dreieckige Montageöffnungen (31) des Schäkels (3) geht, die derart größere Abmessungen aufweisen, daß die Montageöffnungen (31) des Schäkels (3) solche Dreiecksformen aufweisen, die an den Dreiecksquerschnitt des Axialträgers (12) mit einem relevanten Spiel angepaßt sind, das ihre relative Bewegung ermöglicht, wenn der Schlegel ein Hindernis trifft, um eine Rückkehr der Schäkels in die Axialposition aufgrund der Zentrifugalkraft zu begünstigen, auch wenn sie gering ist aufgrund der relativ langsamen Drehung der Welle (1), die die Schlegel (2) mit einer Geschwindigkeit von weniger als 3000 Umdrehungen pro Minute trägt.

4. Werkzeughalterungsvorrichtung nach Anspruch 3, **dadurch gekennzeichnet, daß** die Abmessungen der dreieckigen Montageöffnungen (31) des Schäkels (3) auf dem dreieckigen Axialträger so gut wie das Doppelte der des Axialträgers (12) betragen.

5. Werkzeughalterungsvorrichtung für eine Welle (1), mit einen Axialträger (11, 12) tragenden Gabeln (10), die zum Drehen ein Zwischenelement oder einen Schäkel (3) tragen, dessen unteres Teil oder Schaft durch die Montageöffnungen der Schneid- oder Zerkleinerungsflegel (2) geht,
**dadurch gekennzeichnet, daß** der Axialträger (11) einen dreieckigen Querschnitt aufweist und durch zwei dreieckige Öffnungen (31) des Schäkels (3) geht, die derart größere Abmessungen aufweisen, daß die Montageöffnungen (31) des Schäkels (3) dreieckige Formen aufweisen, die an den Dreiecksquerschnitt des Axialträgers (12) mit einem relevanten Spiel angepaßt sind, und daß der Schaft (311) des Schäkels auch einen dreieckigen Querschnitt aufweist und durch die Montageöffnungen (21) der Schlegel (2) geht, die ebenfalls dreieckig sind und größere Abmessungen derart aufweisen, daß die Montageöffnungen (21) der Schlegel (2) dreieckige Formen aufweisen, die an den Dreiecksquerschnitt des Schaftes (311) des Schäkels (3) mit einem relevanten Spiel angepaßt sind, das die relative Bewegung zwischen dem Schlegel und der Gabel und zwischen den Schlegeln und dem Schäkel ermöglicht, wenn der Schlegel ein Hindernis trifft, um ihre Rückkehr in die Axialposition aufgrund der Zentrifugalkraft zu begünstigen, auch wenn sie gering ist aufgrund der relativ langsamen Drehung der Welle (1), die die Schlegel (2) mit einer Geschwindigkeit von weniger als 3000 Umdrehungen pro Minute trägt.

6. Werkzeughalterungsvorrichtung nach Anspruch 5, **dadurch gekennzeichnet, daß** die Abmessungen der dreieckigen Montageöffnungen (31) des Schäkels (3) auf dem Axialträger mit dreieckigen Querschnitt so gut wie das Doppelte der des Axialträgers betragen und daß ferner die Abmessungen der Montageöffnung (21) der Flegel (2) auf dem dreieckigen Schaft (311) des Schäkels (3) so gut wie das Doppelte der des Schaftes (311) betragen
